# EUROPÄISCHE PATENTSCHRIFT

(11) **EP 3 300 559 B1**
(45) Veröffentlichungstag und Bekanntmachung des Hinweises auf die Patenterteilung: **06.11.2019**
(21) Anmeldenummer: 17192880.7
(22) Anmeldetag: 25.09.2017
(51) Int. Cl.: A01B 63/111, A01B 63/112

(54) **VORRICHTUNG UND VERFAHREN ZUR REGELUNG DES BETRIEBS EINES HYDRAULISCH BETÄTIGBAREN ANBAUGERÄTS AN EINEM FAHRZEUG**
DEVICE AND METHOD FOR GOVERNING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN APPAREIL ISOLÉ HYDRAULIQUE D'UN VÉHICULE

(30) Priorität: 29.09.2016 DE 102016218810
(43) Veröffentlichungstag der Anmeldung: 04.04.2018
(73) Patentinhaber: Robert Bosch GmbH, 70442 Stuttgart (DE)
(72) Erfinder: Schleyer, Markus, 71640 Ludwigsburg (DE); Rose, Steffen, 71638 Ludwigsburg (DE); Neyer, Daniel, 70195 Stuttgart (DE)
(74) Vertreter: Thürer, Andreas

(56) Entgegenhaltungen:
- EP-A1- 2 671 439
- DE-A1- 3 446 811
- DE-A1- 4 222 108
- DE-A1- 19 640 641

## Beschreibung

Die vorliegende Erfindung betrifft eine Vorrichtung für ein Fahrzeug, insbesondere einen Traktor mit einer hydraulischen Betätigungseinheit zur Regelung des Betriebs eines Anbaugeräts an dem Fahrzeug, sowie ein hierfür geeignetes Betriebsverfahren. Insbesondere findet die Erfindung Anwendung bei einem Traktor, einem landwirtschaftlichen Ackerschlepper, einer mobilen Arbeitsmaschine zur Feldbearbeitung oder dergleichen. Ackerschlepper bzw. Traktoren werden als universell einsetzbare Arbeitsmaschinen vorrangig in der Landwirtschaft zur Bearbeitung von Böden eingesetzt.

Das Pflügen als eine der häufigsten Anwendungen stellt hierbei hohe Anforderungen an den Antriebsstrang und die Regelgüte der elektrohydraulischen Hubwerksregelung (EHR). Vor allem bei stark inhomogenen oder sehr feuchten Böden besteht häufig aufgrund einer sehr großen Widerstandskraft am Pflug die Möglichkeit, dass der Traktor steckenbleiben oder der Verbrennungsmotor abgewürgt werden kann. Zusätzlich zu einer Lageregelung des Pflugs versucht die Zugkraftregelung ein Abwürgen des Motors zu verhindern, indem die Zugkraft am traktorseitigen Gelenk des Unterlenkers gemessen und diese auf einen vom Bediener vorgegebenen Wert geregelt wird, welche ein Abwürgen des Motors verhindert bzw. eine Reduzierung des Schlupfs der Antriebsräder bewirkt. Dies geschieht hauptsächlich durch ein Anheben des Pflugs und der daraus resultierenden Verringerung der Widerstandskraft des Pflugs. Aufgrund der Tatsache, dass die Kraft auf die Pflugschar unter anderem von der Eindringtiefe bzw. von der Pflugtiefe abhängt, kann die von einem Pflug erzeugte Kraft in erster Näherung auch als Indikator für die sich einstellende Pflugtiefe herangezogen werden. Sehr häufig kann aus diesem Grund die EHR im Modus Zugkraftregelung bzw. mit einem hohen Anteil des Verstärkungsfaktors für die Zugkraftregelung im Mischregelungsbetrieb betrieben werden.

Zudem verbessert sich während des Betriebs in Zugkraftregelung bei sehr inhomogenen Böden das Resultat des Bearbeitungsprozesses, da der Pflug in sehr dichtem Bodenbereich seine Pflugtiefe verringern würde. Bei sehr welligen und unebenen Böden verbessert sich ebenso das Pflugbild und der Komfort wird erhöht, da sich die Pflugtiefe über die variierende Zugkraft dem Bodenprofil besser anpasst, als wenn rein auf Lage bzw. Tiefe des Pflugs geregelt würde. Nach dem Stand der Technik resultiert die Änderung der Lage des Pflugs jedoch hauptsächlich aus der alleinigen Variation der Höhe des Anbaugeräts während des Pflügens. Für die Ermittlung der Zugkraft nach dem Stand der Technik sind in der Regel zwei Kraftmessbolzen in das Gelenk des Unterlenkers verbaut. Diese können jedoch nur die gesamte Widerstands- bzw. Zugkraft aller am Pflugprozess beteiligten Pflugscharen messen. Hierbei können zwar Unebenheiten im Bodenverlauf (z. B. Hügel, Bodenwellen, Querfurchen) erkannt und diese aufgrund des sich ändernden Kraftverlaufs kompensiert werden. Für ein gleichmäßiges Pflugbild reicht dies in der Regel jedoch nicht aus.

Ein gleichmäßiges Pflugbild, bei dem sich die Neigung des Pflugs annährend nach der Topologie der Ebene des zu bearbeitenden Bodens einstellt, kann mit dieser Anordnung nicht erreicht werden. Zudem werden für die EHR nach dem Stand der Technik zwei kostenintensive Kraftmessbolzen benötigt, welche einen erheblichen Anteil der Gesamtkosten eines EHR-Systems ausmachen. Die Dokumente DE 42 22 108 A1, DE 34 46 811 A1, DE 196 40 641 A1 und EP 2 671 439 A1 beschreiben bekannte Vorrichtungen an einem Fahrzeug mit einer hydraulischen Betätigungseinheit zur Regelung des Betriebs eines Anbaugeräts an dem Fahrzeug.

Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Ermittlung der Lage des Anbaugeräts Bedarf an Verbesserungen.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld geeignete Art die Ermittlung der Lage des Anbaugeräts verbessert werden. Außerdem soll das Verfahren automatisch eine korrekte Einstellung des Anbaugeräts ermöglichen.

Diese Aufgaben werden gelöst mit einer Vorrichtung und einem Verfahren gemäß den unabhängig formulierten Patentansprüchen. Weitere Ausgestaltungen der Erfindung sind in den abhängig formulierten Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt eine Vorrichtung an einem Fahrzeug mit einer hydraulischen Betätigungseinheit zur Regelung des Betriebs eines Anbaugeräts an dem Fahrzeug bei, wobei das Anbaugerät mindestens eine Pflugschar aufweist, umfassend zumindest eine Lageerfassungseinheit mit mindestens einem Lageerfassungssensor, eine Auswerteeinheit und eine datenleitende Verbindung hin zu einem der hydraulischen Betätigungseinheit zugeordneten Steuergerät, wobei der mindestens einen Pflugschar mindestens eine Schwingungsquelle zugeordnet ist, und die Lagerfassungseinheit mindestens einen Schwingungsmesssensor umfasst, welcher dazu eingerichtet ist, mindestens eine von der mindestens einen Schwingungsquelle hervorgerufene Resonanzfrequenz zu erfassen.

Die Schwingungsquelle ist dazu eingerichtet eine oder mehrere mechanische Schwingungen auszulösen. Diese Schwingungen haben eine bestimmte Frequenz und eine bestimmte Amplitude. Die Frequenz ist üblicherweise relativ hoch. Ein geeigneter Wertebereich der Frequenz hängt insbesondere von der Geometrie der Pflugschar ab und kann rechnerisch aus den Konstruktionsdaten bzw. der Schargeometrie ermittelt und/oder experimentell bestimmt werden. Die Amplitude der (mechanischen) Schwingung ist üblicherweise relativ klein, insbesondere im Bereich kleiner 1 Millimeter oder sogar kleiner 500 bzw. kleiner 100 Mikrometer.

Je nachdem, welche Kräfte auf eine Pflugschar durch den Boden einwirken, bzw. je nachdem, wie tief eine Pflugschar in den Boden eingedrungen ist, ändern sich die Resonanzfrequenzen, die durch die Schwingungsquelle hervorgerufen werden. Diese Resonanzfrequenzen können von dem Schwingungsmesssensor erfasst werden. Durch die Resonanzfrequenzen kann somit auf die Eindringtiefe und die an der Pflugschar wirkenden Kräfte geschlossen werden. Entsprechende Werte für die Eindringtiefe und/oder die wirkenden Kräfte können mit Hilfe eines Kennfeldes aus den auftretenden Resonanzfrequenzen ermittelt werden. Die Eindringtiefe ist so insbesondere für die jeweiligen Pflugscharen einzeln bestimmbar.

Dabei handelt es sich bei dem Fahrzeug insbesondere um einen Traktor bzw. eine sogenannten Ackerschlepper. Als Anbaugerät wird insbesondere ein Pflug oder ein ähnliches Bodenbearbeitungsgerät angesehen. Zur Bestimmung der Lage, insbesondere der Höhenlage des Anbaugeräts über Boden, ist eine Lageerfassungseinheit vorgesehen, die mindestens einen Lageerfassungssensor umfasst. Eine zugehörige Auswerteeinheit ist mit der Lageerfassungseinheit elektrisch und datenleitend verbunden und eingerichtet, deren Messsignale zu verarbeiten. Die Auswerteeinheit ist insbesondere eingerichtet, eine Analyse der Daten der Lageerfassungseinheit vorzunehmen, so dass die Pflugscharen eindeutig bezüglich ihrer Lage/Position erfasst bzw. bestimmt werden können.

Die in der Auswerteeinheit bestimmte Lage kann mit vorgegebenen (z. B. gespeicherten und/oder von dem Bediener des Fahrzeugs eingestellten) Parametern abgeglichen oder beeinflusst werden, wobei dann auch ein Regelungssignal an das Steuergerät übermittelt wird und dabei der Betrieb der hydraulischen Betätigungseinheit des Anbaugeräts beeinflusst werden kann. Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens) eine datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein.

Ein Vorteil besteht darin, dass die bekannte Geometrie bzw. die Abmessungen eines bestimmten Pflugs in der Auswerteeinheit, dem Steuergerät oder der Fahrzeugsteuerung gespeichert und für die Auswertung so einfach bereitgestellt werden kann. Damit kann ggf. die Genauigkeit der Auswertung mit Bezug auf konkret hinterlegte Gestaltungen des Anbaugeräts verbessert werden.

Die Erfindung zielt darauf ab, die beim Pflügen relevanten Prozessgrößen, das heißt die Tiefe der einzelnen (insbesondere unterhalb des Trägers befindlichen) Pflugscharen, direkt zu bestimmen, anstatt Zwischengrößen heranzuziehen, die zwar gute Indikatoren darstellen, aber nur indirekt die Prozessgrößen abbilden. Dies erfolgt über die Lageerfassungseinheit, so dass die Zugkraftsensoren entfallen.

Der vorgeschlagenen Vorrichtung liegt der Gedanke einer Bestimmung der Tiefen (gegenüber der Bodenoberfläche) der einzelnen auch insbesondere unterhalb des Trägers befindlichen Pflugscharen zugrunde. Dadurch kann die Position des Pflugs zur Bodenoberfläche direkt bestimmt werden und die Sicherstellung eines gleichmäßigen Pflugbilds deutlich vereinfacht werden. Außerdem kann bei Vorhandensein der nötigen Stellglieder automatisch eine korrekte Einstellung des Pflugs erfolgen, was ansonsten Aufgabe des Fahrers ist.

Bei der Erfindung können die Pflugtiefe und die Ausrichtung des Pflugs (Winkel über dem Boden) aus einer Direktdetektion der Pflugscharen ermittelt werden.

Ein besonderer Vorteil der vorgeschlagenen Maßnahmen ist die direkte Bestimmung der für den Prozess Pflügen relevanten Größen (Tiefe der einzelnen Pflugscharen). Die bekannte gemessene Zugkraft kann nur einen Durchschnittswert aller (insbesondere unterhalb des Trägers befindlichen) Pflugscharen abbilden. Fehler durch Verkippung sind hierbei möglich, ohne detektiert werden zu können. Ein weiterer Vorteil der vorgeschlagenen Vorrichtung besteht in der Ermöglichung der Nutzung weiterer Freiheitsgrade bei der Verstellung des Pflugs: die Nachteile der bekannten Vorrichtung werden vermieden, bei der nur die Höhe des Pflugs verstellt wird, nicht aber die Neigung/Verkippung des Pflugs in Längs- oder Querrichtung. Da hierbei zudem keine Information vorliegt, in welchem Winkel der Pflug zur Bodenoberfläche steht, ist die Neigung über einen Aktor dynamisch nicht einzustellen. Der Fahrer kann die Längsneigung lediglich über die Länge des Oberlenkers feststellen, die Querneigung über eine Einstellschraube. Er wird es in der Regel so tun, dass sich eine gleichmäßige Tiefe bei ebener Bodenoberfläche ergibt. Bei sich ändernder Bodentopologie oder falscher Einstellung ist ein partielles Eintauchen bzw. Ausheben des Pflugs und damit ein ungleichmäßiges Pflugbild nicht zu vermeiden. Durch die automatische Einstellung aller Pflugfreiheitsgerade wird im Gegensatz zu der bekannten Vorrichtung dem Fahrer der oft langwierige Einstellprozess vor dem Pflügen abgenommen. Außerdem können Fehleinstellungen, die in einem ungleichmäßigen Pflugbild resultieren, vermieden werden. Ein weiterer Vorteil besteht im Kosteneinsparpotential durch Entfallen der Zugkraftsensoren.

Bevorzugt ist jeweils eine Lageerfassungseinheit an der ersten Pflugschar und an der letzten Pflugschar verbaut. Mit Vorteil umfasst die Schwingungsquelle mindestens ein Piezoelement. Zweckmäßig umfasst der Schwingungsmesssensor mindestens einen Frequenzerfassungssensor. Vorzugsweise ist die Lageerfassungseinheit aus Schwingungsquelle und Schwingungsmesssensor an dem Träger für die Befestigung der mindestens einen Pflugschar angebracht.

Bevorzugt sind Schwingungsquelle und Schwingungsmesssensor einer Lageerfassungseinheit jeweils an den am Träger gegenüberliegenden Pflugscharen (oben/unten) angeordnet. Die räumliche Trennung ist vorteilhaft, um die Frequenz besser bestimmen zu können. Obere und untere Pflugschar sind mechanisch gekoppelt. Im Betrieb sollten Schwingungsquelle und Schwingungsmesssensor bevorzugt stets die Relativlage zum Träger (oberhalb bzw. unterhalb) einhalten, also insbesondere beim Drehen des Pfluges entsprechend eingestellt werden. Es wird vorgeschlagen, hierfür jeweils ein Piezoelement vorzusehen, welche entsprechend ihrer Lage zum Träger (wechselweise) als Schwingungsquelle bzw. Schwingungsmesssensor fungieren bzw. eingerichtet werden, weil Piezoelemente beide Funktionen erfüllen können. Bevorzugt ist, dass die Schwingungsquelle unterhalb und der Schwingungsmesssensor oberhalb des Trägers vorgesehen/eingerichtet ist/wird, grundsätzlich kann aber auch eine umgekehrte Lageanordnung von Schwingungsquelle und Schwingungsmesssensor vorgesehen sein. Bevorzugt sind Schwingungsquelle und Schwingungsmesssensor zur Bildung einer Lageerfassungseinheit räumlich getrennt angeordnet, insbesondere in der Weise, dass die Schwingungsquelle der unterhalb des Trägers angeordneten mindestens einen Pflugschar und der Schwingungsmesssensor der oberhalb des Trägers angeordneten mindestens einen Pflugschar zugeordnet ist.

Die hydraulische Betätigungseinheit umfasst bevorzugt ein Hubwerk mit einem Hubwerkszylinder für das Anbaugerät, das von der Auswerteeinheit aktivierbar ist. Hierfür sind insbesondere elektrische oder datenleitende Verbindungen vorgesehen. Insbesondere sind die Auswerteeinheit und das Hubwerk so eingerichtet, dass die Auswerteeinheit mindestens eine Zustandsgröße einstellen und/oder auf ein Stellorgan des Hubwerks zugreifen kann. Hierbei ist das Anbaugerät über einen Unterlenker und einen hydraulisch verstellbaren Oberlenkerzylinder mit dem Fahrzeug verbunden. Da der Unterlenker durch den hydraulisch verstellbaren Unterlenkerzylinder in seiner Höhe verstellt werden kann, ist es möglich, das Anbaugerät in dieser Konstellation sowohl in seiner Höhe als auch in seiner Neigung um eine Querachse zu verstellen. Mit Vorteil wird die hydraulische Betätigungseinheit zur Ansteuerung des Oberlenkerzylinders und des Hubwerkzylinders (Unterlenkerzylinder) herangezogen.

Zweckmäßig ist eine mechanische Schwingungsdämpfung oder Entkopplung zwischen der mindestens einen Pflugschar und dem Anbaugerät vorhanden. Vorzugsweise ist am Anschluss des Unterlenkerzylinders oder im Unterlenkerzylinder ein Drucksensor angeordnet. Mit diesem Drucksensor können von dem Unterlenkzylinder erzeugte Kräfte ermittelt werden. Diese ermittelten Kräfte können von der Lageerfassungseinheit mit verarbeitet werden, um aus den von den Schwingungsmesssensoren erfassten Daten die Eindringtiefe der jeweiligen Pflugscharen zu ermitteln.

Mit Vorteil steht der Schwingungsmesssensor mit der Schwingungsquelle und der Auswerteeinheit in Verbindung, wobei ein Vergleichselement für einen Vergleich der Resonanzfrequenz einer in den Boden eingedrungenen Pflugschar und einer Referenz-Resonanzfrequenz vorhanden ist.

Weitere Details der Vorrichtung ergeben sich auch aus der nachfolgenden Erläuterung zu dem Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Weiter wird hier ein Verfahren zum Betrieb eines Fahrzeugs, insbesondere eines Traktors, mit einer hydraulischen Betätigungseinheit zur Regelung des Betriebs eines Anbaugeräts an dem Fahrzeug vorgeschlagen. Das Verfahren kann insbesondere mit der hier ebenfalls vorgeschlagenen Vorrichtung durchgeführt werden, wobei insbesondere die Auswerteeinheit dazu eingerichtet ist, das Verfahren durchzuführen.

Das Verfahren umfasst zumindest die folgenden Schritte:
a) Ermitteln mindestens einer in die mindestens eine Pflugschar eingebrachten Resonanzfrequenz mindestens eines mit einer Schwingungsquelle verbundenen Schwingungsmesssensors;
b) Vergleich der ermittelten Resonanzfrequenz mit einer Referenz-Resonanzfrequenz aller Pflugscharen;
c) Aktivieren der hydraulischen Betätigungseinheit, wenn die ermittelte Resonanzfrequenz von der Referenz-Resonanzfrequenz abweicht.

Die Schritte a) bis c) werden bevorzugt in der angegebenen Reihenfolge durchgeführt, wobei gleichwohl die Schritte zumindest teilweise zeitlich überlagert und/oder separat wiederholt werden können. So kann es bspw. auftreten, dass die Schritte a) bis b) häufiger wiederholt werden, bevor Schritt c) durchgeführt wird, nämlich insbesondere erst dann, wenn die Bedingung in Schritt c) erfüllt ist.

Ausgehend von diesen seitens des Schwingungsmesssensors erzeugten Daten kann gemäß Schritt a) eine Resonanzfrequenz ermittelt werden, die direkt für die Bestimmung einer Höhenlage der Pflugschar bzw. des Anbaugeräts genutzt werden kann. Die relative "Höhenlage" betrifft in diesem Zusammenhang bevorzugt eine Kenngröße, die bspw. eine Aussage zur Eindringtiefe der Pflugschar des Anbaugeräts in den Boden repräsentiert.

Die so ermittelte Höhenlage kann insbesondere in der Auswerteeinheit mit einer vorgegebenen und/oder aktuellen erwarteten Referenz- Resonanzfrequenz verglichen werden (Schritt b)). Die Referenz- Resonanzfrequenz kann im Fahrzeug errechnet werden, hinterlegt und/oder gespeichert sein und der Auswerteeinheit zur Verfügung gestellt werden. Die (aktuelle) Referenz- Resonanzfrequenz wird insbesondere in Abhängigkeit mindestens eines (aktuellen) Betriebsparameters des Fahrzeugs (z. B. Geschwindigkeit, Motorlast etc.) und/oder der hydraulischen Betätigungseinheit (z. B. Hubwerkseinstellung, etc.) vorbestimmt oder ausgewählt. Insoweit wird insbesondere geprüft, ob eine gewünschte bzw. erwartete Referenz-Lage relativ zum Boden tatsächlich aktuell vorliegt.

Gemäß Schritt c) wird dann, wenn die ermittelte Resonanzfrequenz von der aktuellen relevanten bzw. erwarteten Referenz- Resonanzfrequenz abweicht, die hydraulische Betätigungseinheit aktiviert, um eine Anpassung der aktuellen Lage der mindestens einen Pflugschar und/oder des Anbaugeräts hin zur gewünschten Lage vorzunehmen, bspw. insbesondere die Höhenlage des Anbaugeräts über dem Boden anzuheben oder abzusenken. Ggf. kann dieser Betätigungsvorgang auch mit den in den Schritten a) bis b) genannten Schritten überwacht und geregelt werden. Es ist aber auch möglich, dass eine separate Vorgabe aus dem Vergleich gemäß Schritt b) fest vorgegeben und gesteuert wird.

Bevorzugt ist dabei, dass alle Schritte a) bis c) während der Fahrt des Fahrzeugs durchgeführt werden. Ganz besonders bevorzugt wird das Verfahren vom Fahrer und/oder automatisch mit vorgebbaren Fahrsituationen angestoßen und intermittierend und/oder kontinuierlich durchgeführt, bis dieses vom Fahrer und/oder automatisch bei vorgebbaren Fahrsituationen beendet wird.

Mittels einer Lageerfassungseinheit kann die Lage des Anbaugeräts bestimmt und bedarfsorientiert die Lage durch geeigneten Betrieb der hydraulischen Betätigungseinheit eingestellt werden.

Den erfindungsgemäßen Maßnahmen liegt insbesondere der Gedanke einer Sensoranordnung am Pflug sowie eine geeignete Regelstrategie zugrunde, welche die Lage des Pflugs so ändern bzw. anpassen kann, dass alle im Eingriff befindlichen Pflugschare nahezu gleichmäßig dem Bodenprofil folgen und sich somit ein einheitliches und gleichmäßiges Pflugbild einstellt. Dabei wird vorgeschlagen, dass an den Pflugscharen geeignete Aktor-/Sensorelemente (z. B. Piezoelemente) verbaut werden, welche den jeweiligen Pflugschar in Resonanz bringen. Die resultierende Resonanzfrequenzverschiebung kann als Maß für die Eindringtiefe einer Pflugschar herangezogen werden. Des Weiteren muss ein insbesondere doppelt wirkender Zylinder als Oberlenker für die aktive Verkippung des Pflugs zwischen Traktor und Pflug installiert sein.

Gemäß der vorliegenden Erfindung wird die Eindringtiefe der einzelnen Pflugscharen mittels des Eigenfrequenzspektrums der Pflugscharen ermittelt. Aus dem Vergleich mit einer mittleren Eindringtiefe lässt sich die Lage des Pflugs (Höhe, Neigung, Querneigung) bestimmen und wunschgemäß korrigieren, so dass idealerweise der Pflug der Bodenkontur folgt.

Durch die erfindungsgemäßen Maßnahmen ergeben sich insbesondere folgende Vorteile:
- Direkte Bestimmung der für den Prozess Pflügen relevanten individuellen Eindringtiefe einer Pflugschar. Die bisher gemessene Höhe des Pflugs mit einem EHR-System nach dem Stand der Technik stellt nur die relative Lage des Pflugs gegenüber dem Traktor und nicht die absolute Lage zum Bodenprofil dar.
- Ermöglichung der Nutzung weiterer Freiheitsgrade bei der Verstellung des Pflugs.
- Hydraulische Aktoren zur Verstellung der Oberlenkerlänge und des Drehwinkels des Pflugs können genutzt werden, um die Längs- und Querneigung des Pflugs optimal zur Bodenoberfläche auszurichten.
- Komforterhöhung.
- Reduzierung der Systemkosten durch Entfall der Zugkraftsensoren und Nutzung günstiger Piezoelemente.

Bevorzugt wird die resultierende Resonanzfrequenzverschiebung als Maß für die Eindringtiefe der mindestens einen Pflugschar herangezogen. Mit Vorteil wird ausgehend von der ermittelten Resonanzfrequenz der mindestens einen Pflugschar zumindest einen Höhenlage zum Boden, eine Neigung um eine Querachse, eine Drehung um eine Längsachse oder eine Drehung um eine Höhenachse des Anbaugeräts ermittelt. Zweckmäßig wird aus dem Vergleich der Eindringtiefe der einzelnen Pflugschare mittels des Eigenfrequenzspektrums der Pflugschare mit einer mittleren Eindringtiefe die Lage des Anbaugeräts bestimmt und korrigiert.

Die hier aufgezeigte Anordnung und/oder Methode zur Lagereglung bietet insbesondere die Vorteile, dass die Lage (Position) bzw. Tiefe des Anbaugeräts, insbesondere eines Pflugs, mittels der Schwingungsmesssensoren in verlässlicher, genauer und technisch einfacher Weise realisiert ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt bzw. eine solche Kombination hier explizit untersagt wird. Es zeigen:
- Fig. 1:: schematisch eine Seitenansicht eines Traktors mit einer hydraulischen Betätigungseinheit zur Regelung des Betriebs eines Anbaugeräts umfassend ein Sensor-/Aktorelement für eine Lageerfassungseinheit;
- Fig. 2:: Seitenansicht gemäß Fig. 1, bei der die Sensor-/Aktorelemente der Lageerfassungseinheit am Anbaugerät positioniert sind;
- Fig. 2a:: ein Blockschaltbild, wobei ein Sensor-/Aktorelement, bestehend aus Schwingungsquelle und Schwingungsmesssensor, über einen Messwertwandler mit der Auswerteeinheit elektrisch in Verbindung steht;
- Fig. 3:: schematische Darstellung eines Traktors mit angebautem Pflug beim Pflügen während des Einfahrens in eine Bodensenke mit einer bekannten Vorrichtung;
- Fig. 3a bis 3d:: Darstellung der Widerstands- bzw. Pflugkräfte gegenüber der Zeit an den in den Boden eingedrungenen Pflugscharen gemäß Fig. 3;
- Fig. 4:: schematische Darstellung des Traktors und des Pflugs während des Einfahrens in eine Bodensenke mit der erfindungsgemäßen Vorrichtung sowie eine bevorzugt einzustellende Position der Pflugscharen;
- Fig. 4a bis 4d:: Darstellung der Widerstands- bzw. Pflugkräfte gegenüber der Zeit an den in den Boden eingedrungenen Pflugscharen gemäß Fig. 4;
- Fig. 5a:: schematische Darstellung der Anordnung einer Lageerfassungseinheit aus Schwingungsquelle und Schwingungsmesssensor als Sensor-/Aktorelement an der Halterung für die Befestigung zweier frei liegender Pflugschare;
- Fig. 5b:: die Abhängigkeit der Amplitude (obere Abbildung) und der Impedanz (untere Abbildung), jeweils von der Frequenz, für die beiden frei liegenden Pflugschare bei einer Anordnung gemäß Fig. 5a;
- Fig. 6a:: schematische Darstellung der Anordnung einer Lageerfassungseinheit gemäß Fig. 5a, wobei jedoch die untere Pflugschar in den Boden eingedrungen und die obere Pflugschar frei liegend ist;
- Fig. 6b:: die Abhängigkeit der Amplitude (obere Abbildung) und der Impedanz (untere Abbildung), jeweils von der Frequenz, für die frei liegende Pflugschar und für die in den Boden eingedrungene Pflugschar bei einer Anordnung gemäß Fig. 6a;
- Fig. 7a:: schematische Darstellung der Anordnung zweier Pflugschare gemäß Fig. 6a, wobei jedoch eine Schwingungsquelle am Steg der unteren eingedrungenen Pflugschar und ein Schwingungsmesssensor am Steg der oberen freiliegend Pflugschar angeordnet sind;
- Fig. 7b:: die Abhängigkeit der Amplitude (obere Abbildung) und der Impedanz (untere Abbildung), jeweils von der Frequenz, bei einer Anordnung gemäß Fig. 7a; und
- Fig. 8:: die Anordnung eines Drucksensors im Unterlenkerzylinder des Hubwerks.

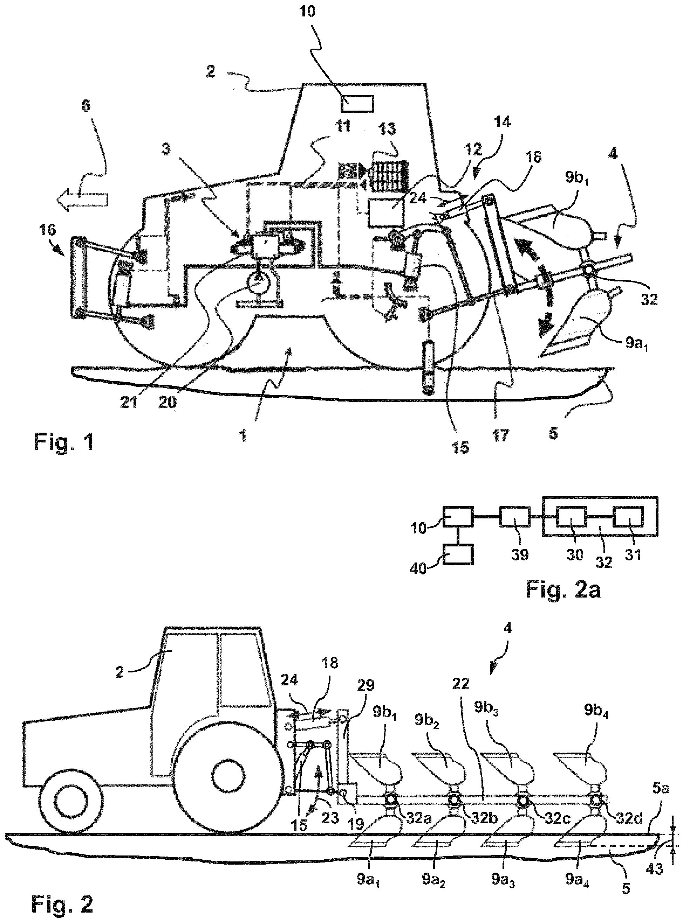

Fig. 1 zeigt die prinzipielle Darstellung der hier angegebenen Vorrichtung 1 an einem Fahrzeug 2, insbesondere nach Art eines Traktors bei der Bodenbearbeitung mit einem Schleppgerät, insbesondere mit einem Pflug. Dabei zieht das Fahrzeug 2 bei einer Fahrt in Fahrtrichtung 6 das Anbaugerät 4 hinter sich her und durch die Oberschicht des Bodens 5. Der allgemeine Fahrbetrieb des Fahrzeugs 2 kann über eine (ggf. separate) Fahrzeugsteuerung 12 beeinflusst werden. Die Lage bzw. Position des Anbaugeräts 4 kann mit einer hydraulischen Betätigungseinheit 3, aufweisend ein Steuergerät 13 zur Ansteuerung der hydraulischen Betätigungseinheit 3 und ein Hubwerk 14 mit einem Unterlenkerzylinder 15 eingestellt werden. Die hydraulische Betätigungseinheit 3 kann insbesondere wie folgt aufgebaut sein: die Pumpe 20 fördert einen Ölstrom zum Regelventil 21, welches den Unterlenkerzylinder 15 steuert. Dieser wirkt auf die Unterlenker 17, wodurch das Anbaugerät 4 gehoben, gehalten oder abgesenkt werden kann. An dem Träger 22 (siehe Fig. 2) ist etwa in einem rechten Winkel ein Hebelarm 29 starr befestigt, an dem das eine Ende eines Oberlenkerzylinders 18 angreift, dessen anderes Ende am Traktor gelagert ist. Mit 24 ist die Bewegungsrichtung des Kolbens im Oberlenkerzylinder 18, mit 32 ein Sensor-/Aktorelement und mit 16 ein Fronthubwerk bezeichnet.

Fig. 2 zeigt eine schematische Darstellung des Fahrzeugs 2 (Ackerschlepper) während des Pflügens mit einem EHR-System. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, den Pflug in dieser Konstellation sowohl in seiner Höhe als auch in seiner Neigung um die Querachse 19 zu verstellen.
Um die Lage des Pflugs im Raum und somit seine Tiefe bzw. Höhe (Höhenlage 25) sowie seine Neigung (Neigungslage 26) ermitteln zu können, sind gemäß Fig. 2 an einem Träger 22 des Pflugs Sensor-/Aktorelemente 32a bis 32d - jeweils bestehend aus einer Schwingungsquelle 31a bis 31d und einem Schwingungsmesssensor 30a bis 30d - angebracht, z. B. durch Kleben.

In Fig. 2 sind mit 9a₁ bis 9a₄ unterhalb und mit 9b₁ bis 9b₄ oberhalb des Trägers 22 angeordnete Pflugschare bezeichnet. Die unterhalb angeordneten Pflugschare 9a₁ bis 9a₄ sind teilweise in den Boden 5 eingedrungen. Mit 5a ist die Bodenoberfläche bezeichnet. Mit 43 ist die Eindringtiefe des in den Boden 5 eingedrungenen Bereichs der unterhalb des Trägers 22 befindlichen Pflugschare 9a₁ bis 9a₄ bezeichnet. Mit 23 ist die Bewegungsrichtung des Unterlenkers 17 in Höhenrichtung bezeichnet.

Nach Fig. 2a steht ein Sensor-/Aktorelement 32, bestehend aus Schwingungsquelle 31 und Schwingungsmesssensor 30, über einen Messwertwandler 39 mit der Auswerteeinheit 10 (sh. Fig. 1) elektrisch in Verbindung. Der Schwingungsmesssensor 30 erfasst die mechanischen Schwingungen (Resonanzfrequenz), die durch die Schwingungsquelle 31 in einer Pflugschar angeregt sind. Der Messwertwandler 39 wandelt die Messwerte des Schwingungsmesssensors 30 in elektrische Impulse um. An die Auswerteeinheit 10 ist ein Vergleichselement 40 angeschlossen, das einen Vergleich der ermittelten Resonanzfrequenz mit einer Referenz-Resonanzfrequenz durchführt. Das Vergleichselement 40 kann in die Auswerteeinheit 10 integriert sein.

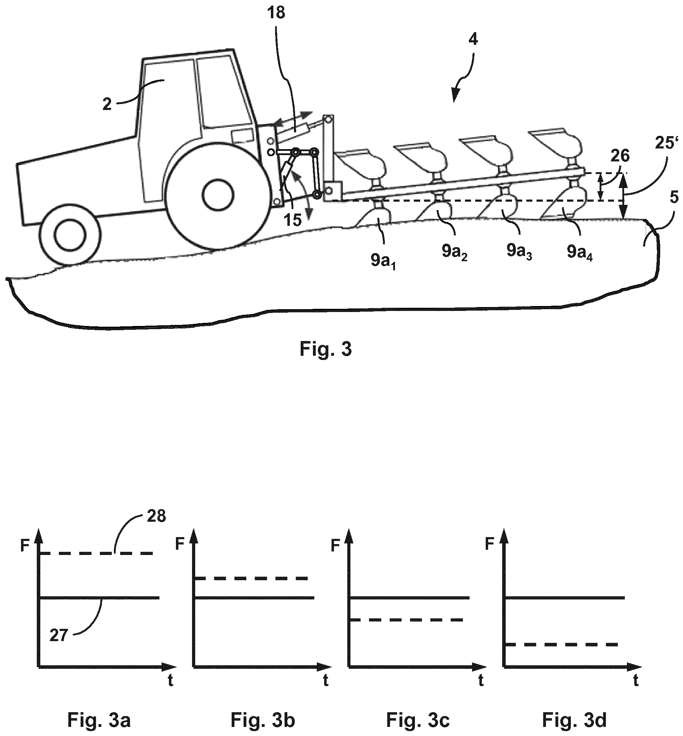

Fig. 3 zeigt die schematische Darstellung eines Traktors beim Pflügen mit einem elektrohydraulischen Hubwerksregelsystem (EHR-System) in einer bekannten Ausführungsform. Der Traktor (Fahrzeug 2) fährt samt Pflug (Anbaugerät 4) in eine Senke des Bodens 5 ein. Deutlich zu erkennen ist, dass die vorderen Pflugschare 9a₁ und 9a₂ tiefer in den Boden einsinken als die hinteren Pflugschare 9a₃ und 9a₄. Den schematischen Darstellungen in Fig. 3a bis 3d der Widerstands- bzw. Pflugkräfte F gegenüber der Zeit t ist ein Ausschnitt des zeitlichen Verlaufs eben dieser zu entnehmen. Hierbei dargestellt sind jeweils die wirkende Widerstandskraft 28 sowie die mittlere Widerstandskraft aller Pflugscharen 27. Die Widerstands- bzw. Pflugkräfte für die vorderen Schare 9a₁, 9a₂ sind dabei signifikant größer als die Widerstands- bzw. Pflugkräfte der hinteren Schare 9a₃,9a₄.
Für den Fall des aus der Senke ausfahrenden Ackerschleppers verhält sich die Kraftentstehung genau entgegen. Da in diesem Fall die vorderen Pflugschare 9a₁ und 9a₂ mehr aus dem Boden ragen als die hinteren Schare 9a₃ und 9a₄ liegen die Kraftniveaus der vorderen Pflugschare deutlich unter den Kraftniveaus der hinteren Pflugschare.

Nun kann die EHR zwar bedingt auf sich ändernde Bodentopologien bzw. Bodenoberflächen reagieren, indem durch das verstärkte Eintauchen der hinteren bzw. vorderen Schare und in der Regel der daraus resultierenden Erhöhung der Gesamtwiderstands- bzw. -pflugkraft (gemessen an den Kraftsensoren in den Gelenkpunkten des Unterlenkers 17) der eingestellte Sollwert der Regelung überschritten und der Pflug infolge ausgehoben wird. Dies erfolgt jedoch in relativer Änderung zum Traktor und nicht absolut zum Bodenprofil. Ein gleichmäßiges Pflugbild, bei dem sich die Neigung des Pflugs annähernd nach der Topologie der Ebene des zu bearbeitenden Bodens 5 einstellt, kann mit dieser bekannten Anordnung nicht erreicht werden. Zudem werden hierbei zwei kostenintensive Kraftmessbolzen benötigt, welche einen erheblichen Anteil der Gesamtkosten eines EHR-Systems ausmachen.

Diese Problematik tritt vor allem bei kleineren Ackerschleppern auf, bei denen der traktorseitige Abstand der Gelenkpunkte zwischen Ober- und Unterlenkeranbindung teils deutlich größer oder kleiner ist, als der anbaugeräteseitige Abstand der Gelenkpunkte zwischen Oberlenker- und Unterlenkeranbindung. Dadurch ergibt sich eine ungünstige Form des entsprechenden Viergelenkmechanismus, welcher kein vorteilhaftes Parallelogramm abbildet und somit für die höhenabhängige Neigung des Pflugs bzw. Anbaugeräts verantwortlich zeigt. Bei extremer Verkippung kann letzten Endes ein zufriedenstellendes Pflugbild nicht garantiert werden, da die Pflugscharen ungleichmäßig in den Boden 5 eindringen.

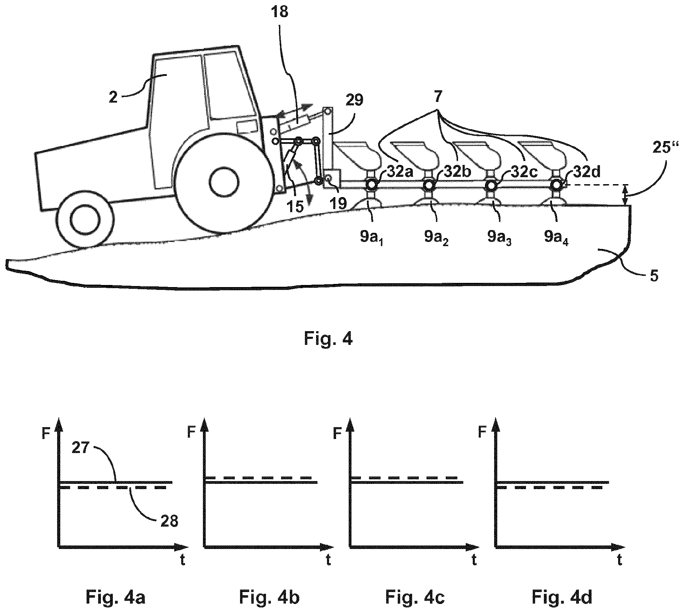

Fig. 4 zeigt die Darstellung des Traktors (Fahrzeug 2) und des angebauten Pflugs (Anbaugerät 4) während des Einfahrens in eine Bodensenke mit der erfindungsgemäßen Vorrichtung und einem EHR-System und unter Anwendung des erfindungsgemäßen Verfahrens sowie eine bevorzugte einzustellende Position der Pflugscharen 9a₁ bis 9a₄. Hierbei ist der Pflug über den Unterlenker 17 und den hydraulisch verstellbaren Oberlenkerzylinder 18 mit dem Traktor verbunden. Da der Unterlenker 17 durch den Unterlenkerzylinder 15 in seiner Höhe verstellt werden kann, ist es möglich, den Pflug in dieser Konstellation sowohl in seiner Höhe als auch in seiner Neigung um die Querachse 19 zu verstellen.
Hierbei kann mit Sensor-/Aktorelementen 32a bis 32d - jeweils bestehend aus einer (nicht dargestellten) Schwingungsquelle 31a bis 31d und einem (nicht dargestellten) Schwingungsmesssensor 30a bis 30d - die individuelle Eindringtiefe 43 einer jeden Pflugschar 9a₁ bis 9a₄ bestimmt werden. Über die Verstellung des Unterlenkerzylinders 15 und des Oberlenkerzylinders 18 kann die Lage des Pflugs dahingehend verändert werden, dass sich eine gleichmäßige individuelle Eindringtiefe 43 aller Pflugscharen in den Boden 5 einstellt.

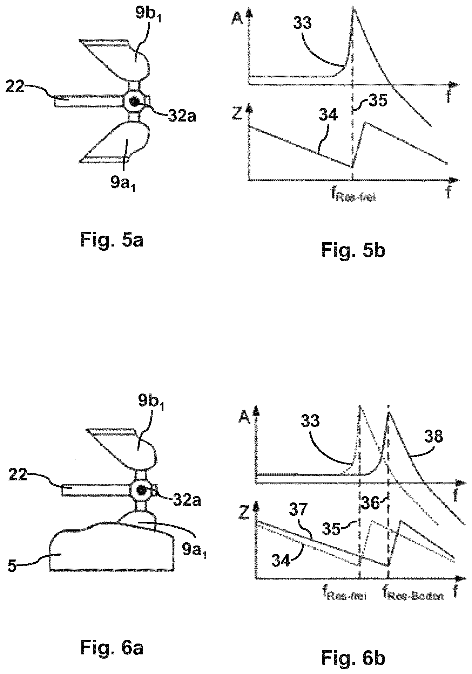

Die Figuren 5a und 6a zeigen eine schematische Darstellung zweier Pflugschare 9a₁, 9b₁ eines Pflugs, die Anordnung eines Sensor-/Aktorelements 32 und in den Figuren 5b und 6b eine schematische Darstellung der relativen Prozessgrößen 33,34 Amplitude A und Impedanz Z über der Frequenz f zur Ermittlung der Eindringtiefe 43 der Pflugschar 9a₁. Für das in Fig. 5a (und ebenso in Fig. 6a) dargestellte Beispiel wird nur ein Element 32 gleichzeitig als Aktor (Schwingungsquelle 31) und als Sensor (Schwingungsmesssensor 30) verwendet. Beispielhaft wird ein Piezoelement vorgeschlagen. Für die Messung der Resonanzfrequenz kann die spezielle "self-sensing/self-actuating" Eigenschaft eines Piezoelements genutzt oder zwei räumlich getrennte Piezoelemente mit jeweiliger Aktuator- oder Sensorfunktion verwendet werden. Das Piezoelement wird an der Halterung angebracht, an welcher beide Pflugschare 9a₁, 9b₁ (oben und unten) befestigt sind. Fig. 5a zeigt einen Pflug in ausgehobenem bzw. in einem freiem Zustand. Das Sensor-/Aktorelement 32 (Piezoelement) regt nun den Pflugschar in einer Abfolge verschiedener Frequenzen (Frequenzsweep) an. Der resultierende Amplitudenverlauf der Schwingung wird durch eine Kurve 33 beschrieben. Der charakteristische Impedanzverlauf des Piezoelements in Verbindung mit der effektiven Scharmasse wird in Kennlinie 34 schematisch dargestellt. Eine mechanische Schwingungsdämpfung (bzw. Entkopplung) zwischen Pflugschar und Pflug kann hierbei die Schwingungscharakteristik verbessern. Nach der erstmaligen Ermittlung der Resonanzfrequenz im ausgefahrenen Zustand wird jener Kalibrierwert im Steuergerät 13 (oder in der Auswerteeinheit 10 oder im Vergleichselement 40) gespeichert.

Das Piezoelement regt im folgenden Prozess die Pflugschar immer in seiner Resonanzfrequenz an. Dringt der Pflug in den Boden 5 ein, gemäß Fig. 6a, verkleinert sich der Resonanzkörper der Pflugschar und die Eigenfrequenz erhöht sich. Im "self-sensing/selfactuating" Betrieb kann mit Hilfe unterschiedlicher Detektionsverfahren (z. B. effektive Impedanzänderung des Piezoelements) die Resonanzfrequenzänderung detektiert (z. B. Phasenregelschleife PLL) und somit auf die individuelle Eindringtiefe der Pflugschar 9a₁ geschlossen werden. Basierend auf dem gleichen Prinzip kann auch eine getrennte Aktuierung und Messung mit Hilfe zweier unterschiedlicher Piezoelemente erfolgen. Die Differenz zwischen der Resonanzfrequenz 36 bei eingefahrenem Pflug und der abgespeicherten Resonanzfrequenz 35 bei ausgefahrenem Pflug kann als Maß für die Eindringtiefe 43 des Pflugschars 9a₁ in den Boden 5 interpretiert werden.

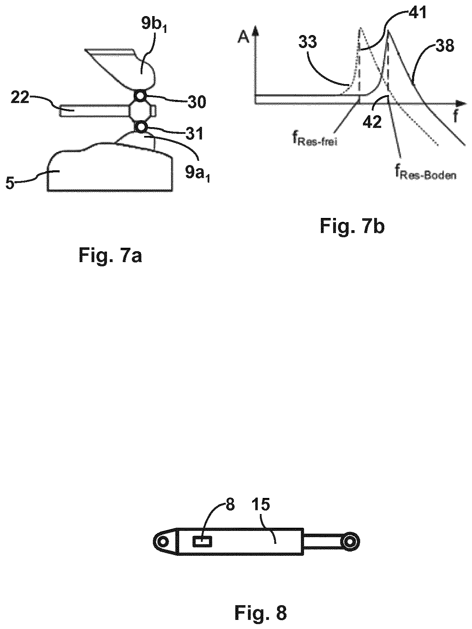

Alternativ wird eine Sensoranordnung vorgeschlagen, bei der gemäß Fig. 7a jeweils zwei oder mehrere getrennte Sensor- und Aktorlemente an einemPflugschar-Paar verbaut werden. Hierbei wird z. B. Element 31 als Aktor verwendet, welcher das Schargestell samt den Pflugscharen zum Schwingen anregt. Die Anregung findet hierbei im Bereich der Eigenfrequenz 41 des ausgefahrenen Pflugs statt. Befindet sich der Pflug im Boden 5, sinkt wiederum die frei schwingbare Fläche des Schars und die resultierende Eigenfrequenz 42 des Schars erhöht sich. Mit dem Element 30 als Sensor kann die Frequenz bestimmt und über die Differenz zwischen der anregenden Frequenz 41 und der gemessenen Frequenz (resultierende Eigenfrequenz 42) kann wiederum auf die Eindringtiefe 43 geschlossen werden. Beide Elemente 31 als auch 30 müssen über eine räumliche Trennung verfügen, so dass Element 30 nicht direkt durch Element 31 angeregt werden kann.

Für die jeweils ähnlichen Detektionsverfahren gilt, dass sich mit Änderung der Bodenbeschaffenheit (z. B. inhomogene Böden, feuchte Böden) ggf. auch eine veränderliche mechanische Widerstandskraft F und dementsprechend auch eine andere (höhere) Einspannung des Pflugs ergeben kann. Eine erhöhte Einspannung hat ebenso eine Erhöhung der Eigenfrequenz zur Folge. Somit kann indirekt ggf. auch auf sich ändernde Widerstandskräfte F geschlossen werden. Es könnte somit ebenso ein Ausheben des Pflugs während der Regelung bei höher werdenden Pflugkräften erreicht werden. Dies kann ein Abwürgen des Fahrzeugs 2 oder ein Festfahren verhindern helfen.

Für eine kostengünstige Alternative wird vorgeschlagen, nur an der ersten Pflugschar 9a₁ sowie an der letzten Pflugschar 9a₄ Sensoren zu verbauen.

Nach Fig. 8 ist ein Drucksensor 8 im Unterlenkerzylinder 15 verbaut.

Die Erfindung wurde am Beispiel eins Pflugs näher erläutert. Generell lässt sich die vorgestellte Sensoranordnung und Regelstrategie auch auf andere Anbaugeräte zur Bodenbearbeitung, wie zum Beispiel einem Grubber, übertragen.

### Bezugszeichen

- 1.: Vorrichtung
- 2: Fahrzeug
- 3: hydraulische Betätigungseinheit
- 4: Anbaugerät
- 5: Boden
- 5a: Bodenoberfläche
- 6: Fahrtrichtung
- 7: Lageerfassungseinheit
- 8: Drucksensor
- 9a₁ bis 9a₄: Pflugscharen unterhalb des Trägers
- 9b₁ bis 9b₄: Pflugscharen oberhalb des Trägers
- 10: Auswerteeinheit
- 11: datenleitende Verbindung
- 12: Fahrzeugsteuerung
- 13: Steuergerät
- 14: Hubwerk
- 15: Unterlenkerzylinder
- 16: Fronthubwerk
- 17: Unterlenker
- 18: Oberlenkerzylinder
- 19: Querachse
- 20: Pumpe
- 21: Regelventil
- 22: Träger
- 23: Bewegungsrichtung
- 24: Bewegungsrichtung
- 25': aktuelle Höhenlage
- 25": Referenz-Höhenlage
- 26: Neigungslage
- 27: mittlere Widerstandskraft
- 28: Widerstandskraft
- 29: Hebelarm
- 30: Schwingungsmesssensor
- 30a bis 30d: Schwingungsmesssensoren
- 31: Schwingungsquelle
- 31a bis 31d: Schwingungsquellen
- 32: Sensor-/Aktorelement
- 32a bis 32d: Sensor-/Aktorelemente
- 33: Amplitudenverlauf
- 34: Impedanzverlauf
- 35: gespeicherte Resonanzfrequenz
- 36: aktuelle Resonanzfrequenz
- 37: aktueller Impedanzverlauf
- 38: aktueller Amplitudenverlauf
- 39: Messwertwandler
- 40: Vergleichselement
- 41: Eigenfrequenz
- 42: resultierende Eigenfrequenz
- 43: Eindringtiefe

## Patentansprüche

1. Vorrichtung (1) an einem Fahrzeug (2) mit einer hydraulischen Betätigungseinheit (3) zur Regelung des Betriebs eines Anbaugeräts (4) an dem Fahrzeug (2), wobei das Anbaugerät (4) mindestens eine Pflugschar (9a₁ bis 9a₄; 9b₁ bis 9b₄) aufweist, umfassend zumindest eine Lageerfassungseinheit (7) mit mindestens einem Lageerfassungssensor, eine Auswerteeinheit (10) und eine datenleitende Verbindung (11) hin zu einem der hydraulischen Betätigungseinheit zugeordneten Steuergerät (13), **dadurch gekennzeichnet, dass** der mindestens einen Pflugschar (9a₁ bis 9a₄; 9b₁ bis 9b₄) mindestens eine Schwingungsquelle (31; 31a bis 31d) zugeordnet ist, und die Lagerfassungseinheit (7) mindestens einen Schwingungsmesssensor (30; 30a bis 30d) umfasst, welcher dazu eingerichtet ist mindestens eine von der mindestens einen Schwingungsquelle (31; 31a bis 31d) hervorgerufene Resonanzfrequenz zu erfassen.

2. Vorrichtung (1) nach Anspruch 1, **dadurch gekennzeichnet, dass** jeweils eine Lageerfassungseinheit (7) an der ersten Pflugschar (9a₁, 9b₁) und an der letzten Pflugschar (9a₄; 9b₄) verbaut sind.

3. Vorrichtung (1) nach Anspruch 1 oder 2, **dadurch gekennzeichnet, dass** die Schwingungsquelle (31; 31a bis 31d) mindestens ein Piezoelement umfasst.

4. Vorrichtung (1) nach einem der Ansprüche 1 bis 3, **dadurch gekennzeichnet, dass** der Schwingungsmesssensor (30; 30a bis 30d) mindestens einen Frequenzerfassungssensor umfasst.

5. Vorrichtung (1) nach einem der Ansprüche 1 bis 4, **dadurch gekennzeichnet, dass** die Lageerfassungseinheit (7) als Sensor-/Aktorelement (32; 32a bis 32d) aus Schwingungsquelle (31; 31a bis 31d) und Schwingungsmesssensor (30; 30a bis 30d) an dem Träger (22) für die Befestigung der mindestens einen Pflugschar (9a₁ bis 9a₄; 9b₁ bis 9b₄) angebracht ist.

6. Vorrichtung (1) nach einem der Ansprüche 1 bis 5, **dadurch gekennzeichnet, dass** als Lageerfassungseinheit (7) jeweils räumlich getrennt die Schwingungsquelle (31; 31a bis 31d) der unterhalb des Trägers (22) angeordneten mindestens einen Pflugschar (9a₁ bis 9a₄) und der Schwingungsmesssensor (30; 30a bis 30d) der oberhalb des Trägers (22) angeordneten mindestens einen Pflugschar (9b₁ bis 9b₄) zugeordnet ist.

7. Vorrichtung (1) nach einem der Ansprüche 1 bis 6, **dadurch gekennzeichnet, dass** die hydraulische Betätigungseinheit (3) zur Ansteuerung eines Oberlenkerzylinders (18) und eines Hubwerkzylinders (Unterlenkerzylinder 15) herangezogen wird.

8. Vorrichtung (1) nach einem der Ansprüche 1 bis 7, **dadurch gekennzeichnet, dass** eine mechanische Schwingungsdämpfung oder Entkopplung zwischen der mindestens einen Pflugschar (9a₁ bis 9a₄; 9b₁ bis 9b₄) und dem Anbaugerät (4) vorhanden ist.

9. Vorrichtung (1) nach einem der Ansprüche 1 bis 8, **dadurch gekennzeichnet, dass** der Schwingungsmesssensor (30; 30a bis 30d) mit der Schwingungsquelle (31; 31a bis 31d) und der Auswerteeinheit (10) in Verbindung steht, wobei ein Vergleichselement (44) für einen Vergleich der Resonanzfrequenz einer in den Boden (5) eingedrungenen Pflugschar (9a₁ bis 9a₄; 9b₁ bis 9b₄) mit einer Referenz-Resonanzfrequenz vorhanden ist.

10. Verfahren zum Betrieb eines Fahrzeugs (2) mit einer hydraulischen Betätigungseinheit (3) zur Regelung des Betriebs eines Anbaugeräts (4) an dem Fahrzeug (2), wobei das Verfahren zumindest die folgenden Schritte umfasst:
a) Ermitteln mindestens einer in die mindestens eine Pflugschar (9a₁ bis 9a₄ ; 9b₁ bis 9b₄) eingebrachten Resonanzfrequenz mittels mindestens eines mit einer Schwingungsquelle (31; 31a bis 31d) verbundenen Schwingungsmesssensors (30; 30a bis 30d);
b) Vergleich der ermittelten Resonanzfrequenz mit einer Referenz-Resonanzfrequenz aller Pflugscharen;
c) Aktivieren der hydraulischen Betätigungseinheit (3), wenn die ermittelte Resonanzfrequenz von der Referenz- Resonanzfrequenz abweicht.

11. Verfahren nach Anspruch 10, bei dem alle Schritte a) bis c) während der Fahrt des Fahrzeugs (2) durchgeführt werden.

12. Verfahren nach Anspruch 10 oder 11, wobei ausgehend von der ermittelten Resonanzfrequenz der mindestens einen Pflugschar (9a₁ bis 9a₄; 9b₁ bis 9b₄) zumindest eine Höhenlage (25', 25") zum Boden (5), eine Neigung um eine Querachse (19), eine Drehung um eine Längsachse oder eine Drehung um eine Höhenachse des Anbaugeräts (4) ermittelt wird.

13. Verfahren nach einem der Ansprüche 10 bis 12, wobei aus dem Vergleich der Eindringtiefe (43) der einzelnen Pflugschare (9a₁ bis 9a₄) mittels des Eigenfrequenzspektrums der Pflugschare (9a₁ bis 9a₄) mit einer mittleren Eindringtiefe die Lage des Anbaugeräts (4) bestimmt und korrigiert wird.

## Claims

1. Device (1) on a vehicle (2) having a hydraulic actuating unit (3) for governing the operation of an attachment (4) on the vehicle (2), the attachment (4) having at least one ploughshare (9a₁ to 9a₄; 9b₁ to 9b₄), comprising at least one position detection unit (7) having at least one position detection sensor, an evaluation unit (10) and a data-carrying connection (11) to a controller (13) assigned to the hydraulic actuating unit,
**characterized in that**
the at least one ploughshare (9a₁ to 9a₄; 9b₁ to 9b₄) is assigned at least one vibration source (31; 31a to 31d), and the position detection unit (7) comprises at least one vibration measuring sensor (30; 30a to 30d), which is set up to detect at least one resonant frequency caused by the at least one vibration source (31; 31a to 31d).

2. Device (1) according to Claim 1, **characterized in that** in each case a position detection unit (7) is installed on the first ploughshare (9a₁, 9b₁) and on the last ploughshare (9a₄; 9b₄) .

3. Device (1) according to Claim 1 or 2, **characterized in that** the vibration source (31; 31a to 31d) comprises at least one piezoelectric element.

4. Device (1) according to one of Claims 1 to 3, **characterized in that** the vibration measuring sensor (30; 30a to 30d) comprises at least one frequency detection sensor.

5. Device (1) according to one of Claims 1 to 4, **characterized in that** the position detection unit (7), as a sensor/actuator element (32; 32a to 32d) composed of vibration source (31; 31a to 31d) and vibration measuring sensor (30; 30a to 30d), is attached to the support (22) for fixing the at least one ploughshare (9a₁ to 9a₄; 9b₁ to 9b₄).

6. Device (1) according to one of Claims 1 to 5, **characterized in that** as the position detection unit (7), the vibration source (31; 31a to 31d) is assigned to the at least one ploughshare (9a₁ to 9a₄) arranged underneath the support (22), and the vibration measuring sensor (30; 30a to 30d) is assigned to the at least one ploughshare (9b₁ to 9b₄) arranged above the support (22), in each case physically separately.

7. Device (1) according to one of Claims 1 to 6, **characterized in that** the hydraulic actuating unit (3) is used to drive an upper link cylinder (18) and a lifting mechanism cylinder (lower link cylinder 15) .

8. Device (1) according to one of Claims 1 to 7, **characterized in that** there is mechanical vibration damping or decoupling between the at least one ploughshare (9a₁ to 9a₄; 9b₁ to 9b₄) and the attachment (4).

9. Device (1) according to one of Claims 1 to 8, **characterized in that** the vibration measuring sensor (30; 30a to 30d) is connected to the vibration source (31; 31a to 31d) and the evaluation unit (10), wherein there is a comparison element (44) for a comparison of the resonant frequency of a ploughshare (9a₁ to 9a₄; 9b₁ to 9b₄) that has penetrated into the ground (5) with a reference resonant frequency.

10. Method for operating a vehicle (2) having a hydraulic actuating unit (3) for governing the operation of an attachment (4) on the vehicle (2), wherein the method comprises at least the following steps:
a) ascertaining at least one resonant frequency introduced into the at least one ploughshare (9a₁ to 9a₄; 9b₁ to 9b₄) by means of at least one vibration measuring sensor (30; 30a to 30d) connected to a vibration source (31; 31a to 31d);
b) comparing the ascertained resonant frequency with a reference resonant frequency of all the ploughshares;
c) activating the hydraulic actuating unit (3) if the ascertained resonant frequency differs from the reference resonant frequency.

11. Method according to Claim 10, in which all the steps a) to c) are carried out while the vehicle (2) is travelling.

12. Method according to Claim 10 or 11, wherein, starting from the ascertained resonant frequency of the at least one ploughshare (9a₁ to 9a₄; 9b₁ to 9b₄), at least one vertical position (25', 25") relative to the ground (5), an inclination about a transverse axis (19), a rotation about a longitudinal axis or a rotation about a vertical axis of the attachment (4) is ascertained.

13. Method according to one of Claims 10 to 12, wherein the position of the attachment (4) is determined from the comparison of the penetration depth (43) of the individual ploughshare (9a₁ to 9a₄) by means of the natural frequency spectrum of the ploughshare (9a₁ to 9a₄) with an average penetration depth, and is corrected.

## Revendications

1. Dispositif (1) sur un véhicule (2) comprenant une unité d'actionnement hydraulique (3) destinée à réguler le fonctionnement d'un accessoire porté (4) sur le véhicule (2), l'accessoire porté (4) possédant au moins un soc de charrue (9a₁ à 9a₄ ; 9b₁ à 9b₄), comprenant au moins une unité de détection de position (7) dotée d'au moins un capteur de détection de position, une unité d'interprétation (10) et une liaison de transmission de données (11) vers un contrôleur (13) associé à l'unité d'actionnement hydraulique,
**caractérisé en ce que**
au moins une source d'oscillation (31 ; 31a à 31d) est associée à l'au moins un soc de charrue (9a₁ à 9a₄ ; 9b₁ à 9b₄) et l'unité de détection de position (7) comporte au moins un capteur de mesure d'oscillations (30 ; 30a à 30d) qui est conçu pour détecter au moins une fréquence de résonance provoquée par l'au moins une source d'oscillation (31 ; 31a à 31d).

2. Dispositif (1) selon la revendication 1, **caractérisé en ce qu'**une unité de détection de position (7) est respectivement installée au niveau du premier soc de charrue (9a₁, 9b₁) et au niveau du dernier soc de charrue (9a₄, 9b₄) .

3. Dispositif (1) selon la revendication 1 ou 2, **caractérisé en ce que** la source d'oscillation (31 ; 31a à 31d) comporte au moins un élément piézoélectrique.

4. Dispositif (1) selon l'une des revendications 1 à 3, **caractérisé en ce que** le capteur de mesure d'oscillations (30 ; 30a à 30d) comporte au moins un capteur de détection de fréquence.

5. Dispositif (1) selon l'une des revendications 1 à 4, **caractérisé en ce que** l'unité de détection de position (7) est montée sur l'élément porteur (22) pour la fixation de l'au moins un soc de charrue (9a₁ à 9a₄ ; 9b₁ à 9b₄) sous la forme d'un élément capteur/actionneur (32 ; 32a à 32d) constitué de la source d'oscillation (31 ; 31a à 31d) et du capteur de mesure d'oscillations (30 ; 30a à 30d).

6. Dispositif (1) selon l'une des revendications 1 à 5, **caractérisé en ce que** l'unité de détection de position (7) est réalisée sous la forme de la source d'oscillation (31 ; 31a à 31d) associée à l'au moins un soc de charrue (9a₁ à 9a₄) disposé sous l'élément porteur (22) et du capteur de mesure d'oscillations (30 ; 30a à 30d) associé à l'au moins un soc de charrue (9b₁ à 9b₄) disposé au-dessus de l'élément porteur (22), respectivement séparément dans l'espace.

7. Dispositif (1) selon l'une des revendications 1 à 6, **caractérisé en ce que** l'unité d'actionnement hydraulique (3) est utilisée pour exciter un vérin de biellette supérieure (18) et un vérin de mécanisme de levage (vérin de biellette inférieure 15).

8. Dispositif (1) selon l'une des revendications 1 à 7, **caractérisé en ce qu'**un amortissement mécanique des oscillations ou un découplage se trouve entre l'au moins un soc de charrue (9a₁ à 9a₄ ; 9b₁ à 9b₄) et l'accessoire porté (4).

9. Dispositif (1) selon l'une des revendications 1 à 8, **caractérisé en ce que** le capteur de mesure d'oscillations (30 ; 30a à 30d) est relié à la source d'oscillation (31 ; 31a à 31d) et à l'unité d'interprétation (10), un élément comparateur (44) étant présent pour une comparaison de la fréquence de résonance d'un soc de charrue (9a₁ à 9a₄ ; 9b₁ à 9b₄) ayant pénétré dans le sol (5) avec une fréquence de résonance de référence.

10. Procédé pour faire fonctionner un véhicule (2) comprenant une unité d'actionnement hydraulique (3) destinée à réguler le fonctionnement d'un accessoire porté (4) sur le véhicule (2), le procédé comprenant au moins les étapes suivantes :
a) détermination d'au moins une fréquence de résonance introduite dans l'au moins un soc de charrue (9a₁ à 9a₄ ; 9b₁ à 9b₄) au moyen d'au moins un capteur de mesure d'oscillations (30 ; 30a à 30d) relié à une source d'oscillation (31 ; 31a à 31d) ;
b) comparaison de la fréquence de résonance déterminée avec une fréquence de résonance de référence de tous les socs de charrue ;
c) activation de l'unité d'actionnement hydraulique (3) lorsque la fréquence de résonance déterminée est différente de la fréquence de résonance de référence.

11. Procédé selon la revendication 10, selon lequel toutes les étapes a) à c) sont exécutées pendant le déplacement du véhicule (2).

12. Procédé selon la revendication 10 ou 11, au moins une position en hauteur (25', 25") par rapport au sol (5), une inclinaison autour d'un axe transversal (19), une rotation autour d'un axe longitudinal ou une rotation autour d'un axe de hauteur de l'accessoire porté (4) étant déterminées à partir de la fréquence de résonance déterminée de l'au moins un soc de charrue (9a₁ à 9a₄ ; 9b₁ à 9b₄).

13. Procédé selon l'une des revendications 10 à 12, la position de l'accessoire porté (4) étant identifiée et corrigée à partir de la comparaison de la profondeur de pénétration (43) des socs de charrue (9a₁ à 9a₄) individuels au moyen du spectre de fréquence propre des socs de charrue (9a₁ à 9a₄) avec une profondeur de pénétration moyenne.
